# EUROPEAN PATENT APPLICATION

(11) **EP 4 015 156 A1**
(43) Date of publication of application: **22.06.2022**
(21) Application number: 20214246.9
(22) Date of filing: 15.12.2020
(51) Int. Cl.: B25J 9/00, B66D 3/18

(54) **LOAD SUPPORTING DEVICE AND ITS USE**

(71) Applicant: Auxivo AG, 8603 Schwerzenbach (CH)
(72) Inventor: REICHARD, Benno, 8603 Schwerzenbach (CH); MUELLER, Flavio, 8603 Schwerzenbach (CH); BARTENBACH, Volker, 8603 Schwerzenbach (CH)
(74) Representative: Bird & Bird LLP

(57) **Abstract**

Load supporting device (1) for attaching to the pelvis of a user, the supporting device comprising a base member (2) having a first groove (3) extending along a first axis A, a first (4a) and a second extension section (4b), wherein the first groove is arranged between the first and second extension sections, an angled first lateral member (11a), an end of which is mechanically connected with the first extension section, wherein the first lateral member can be positioned essentially perpendicularly to the first axis and/or can be pivoted relative to the base member when the mechanical connection with the base member is released, and an angled second lateral member (11b), an end of which is mechanically connected with the second extension section, wherein the second lateral member can be positioned essentially perpendicularly to the first axis and/or can be pivoted relative to the base member when the mechanical connection with the base member is released, wherein the first and second lateral members are arranged to transfer the load supported by the load supporting device onto a user's hips in its state of use, a dorsal member (21) having a second groove (22) which is mechanically connected with the first groove, wherein the second groove extends along the first axis, wherein the dorsal member is arranged to abut on the back of the user in the state of use, wherein the first groove is arranged to guide the second groove slidingly along the first axis, when the mechanical connection between the first and second grooves is temporarily released.

## Description

### Description

The invention relates to a load supporting device for attaching to the pelvis of a user. The invention can be used advantageously for lifting and/or particularly carrying a piece of luggage, a piece of furniture, construction material, construction components, a larger or heavier assembly, moving boxes, parcels, bags, and/or other heavy loads.

An average human can lift and carry only a limited load. The lifted load can impose mechanical stress on the muscles and tendons, the skeleton and its cartilages and joints. Repeated lifting of greater loads can cause fatigue and wear particularly of the joints. Further, the human needs to stabilize the lifted load need by his torso and spine. Particularly, the torso's muscles can get tired due to carrying heavier loads in which tired state the joints gets even more stressed.

The portable load lifting assist system of WO 2011/127471 A1 includes a movable support structure including an exoskeleton torso including an exoskeleton trunk that is configured to be coupled to a person's upper body, and a load lifting mechanism secured to the movable support structure including a winch having a motor driven reel mechanism for reeling first and second lifting straps or cables that are secured to first and second end effectors. First and second handles are attached to an outside surface of the first and second end effectors, wherein the lifting straps or cables when driven by the winch lift a load contacted by the first and second end effectors. A lower extremity exoskeleton is configured to be coupled to a person's lower limbs. The exoskeleton trunk couples to the person's upper body through an upper body interface device that is coupled to the lower extremity exoskeleton.

The portable load lifting assist system is quite complex and bulky.

### Problem and solution

It is an object to provide an improved load supporting device.

This object is achieved by the load supporting device according to claim 1. Preferred embodiments form the subject matter of the dependent claims.

The load supporting device of claim 1 is suitable for attaching to the pelvis of a user. The supporting device comprises a base member having a first groove extending along a first axis A, a first extension section and a second extension section. The first groove is arranged between the first and second extension sections. Further, the device includes an angled first lateral member, an end of which is mechanically connected with the first extension section. The first lateral member can be positioned essentially perpendicularly to the first axis and/or can be pivoted relative to the base member, when the mechanical connection with the base member is released. The device also includes an angled second lateral member, an end of which is mechanically connected with the second extension section. The second lateral member can be positioned essentially perpendicularly to the first axis and/or can be pivoted relative to the base member, when the mechanical connection with the base member is released. The first and second lateral members are arranged to transfer the load supported by the load supporting device onto a user's hips, particularly to the user's iliac crests, when the load supporting device is used (state of use). The load supporting device comprises a dorsal member having a second groove which is mechanically connected with the first groove, wherein the second groove extends along the first axis, wherein the dorsal member is arranged to abut on the back of the user in the state of use. The first groove is arranged to slidingly guide the second groove along the first axis, when the mechanical connection between the first and second grooves is temporarily released.

The supported load can be transferred to the user's hips, particularly to the user's iliac crests, while using the load supporting device. As the relative positions of the base member and its lateral and dorsal members can be adjusted, the load supporting device can be better adapted to the anatomy of the user. When the dorsal member is positioned relative to the base member, that is the dorsal member is positioned closer of further away from the base member, the cooperating first and second grooves allow an improved guiding of the dorsal member. Further, the first and second grooves may help to improve the mechanical stability of the load supporting device during use. Thereby, the object is achieved. Further, the claimed load supporting device can be lighter or cheaper than the known portable load lifting assist system.

### Preferred embodiments

Preferred embodiments explained in the following can be combined with each other, advantageously, unless stated otherwise.

In an embodiment, a base of the first groove is arranged in a first plane and the extension sections are arranged in a spaced apart second plane. Side walls of the first groove can merge with curves into the base of the first groove and into the extension sections. This may help to improve the mechanical stability of the base member. A base of the second groove can be wider or narrower than the base of the first groove.

Another embodiment comprises a first and a second hip pad. The first hip pad is mechanically connected to the first lateral member and the second hip pad to the second lateral member. The hip pads are arranged between the respective lateral member and the respective user's hip in the state of use. The hip pads are arranged to transfer the load supported by the load supporting device onto the user's iliac crests. This may help to reduce the load imposed on the spine and the muscles of the torso.

Preferably, the mechanical connections of the first hip pad with the first lateral member and of the second hip pad with the second lateral member are arranged to permit relative rotational movement, preferably about an essentially horizontal axis in the state of use, preferably by up to +/- 90°, further preferred by up to +/- 15°, and/or relative translational movement. This may help to allow a more convenient use of the load supporting device.

Further preferably, the mechanical connections of the first hip pad with the first lateral member and of the second hip pad with the second lateral member are arranged to permit an angular movement such that the hip pad may tilt relative to the respective lateral member, preferably by up to +/- 10° relative to the first axis. The mechanical connections may be ball and socket joints. This may help to allow a more convenient use of the load supporting device.

Preferably, the mechanical connection between one or both of the lateral members and the base member is a hinge or a ball and socket joint.

A further embodiment comprises a releasable belt member which is arranged to surround the pelvis or hips of the user in the state of use and is mechanically connected to the first and second hip pad. The releasable belt member can include the first and second hip pad. This may help to better secure the load supporting device to the user's pelvis.

Preferably, the belt member may be mechanically connected with a frontal hip pad arranged to rest on the abdomen in the state of use. The frontal hip pad may have a loop or slit for accepting the belt member. The mechanical connection can have a ball and a cup for accepting the ball. This may help to reduce the pressure on the abdomen in the state of use.

In an embodiment, a first arm extends from the dorsal member and away from the base member, wherein a free end of the first arm is positioned higher than and in front of a shoulder of the user in the state of use. The first arm may extend generally upwardly from the dorsal member in the state of use. The first arm can be bolted, riveted, welded or glued to the dorsal member. The first arm may form an angle of less than 30° with the first axis. The first arm may provide a more convenient attachment point for the load to be supported. The first arm may allow the user to better control the supported load. The first arm may have an angled cross section. The cross section can have an H-shape, an L-shape, a T-shape, a U-shape or a V-shape. This may help to improve the first arm's resistance against bending by the supported load (bending stiffness).

Another embodiment comprises a load bearing member, such as a strap or rope, which extends from the free end of the first arm. A payload attachment member, preferably a hook, a shackle, a snap shackle, a soft shackle or carabiner or other lifting tackle, can be mechanically connected to a free end of the load bearing member. A length of the load bearing member between the arm's free end and the payload attachment member can be adjustable. This may help to tackle the load, to support the load and/or to handle it in the state of use.

Preferably, the first arm supports a spool, which can be spring loaded, which is arranged for winding up the load bearing member, wherein the load bearing member is mechanically connected with the spool. This may help to simplify adjusting the length of the load bearing member.

Preferably, the first arm or the spool comprise a releasable brake, preferably a cam cleat, suitable to prevent unintended unwinding of the load bearing member. This may help to simplify adjusting the length of the load bearing member.

An embodiment comprises a second arm similar to the first arm explained above, wherein a free end of the second arm and the first arm's free end leave a gap for the neck and/or head of the user in the state of use. This may help to better distribute the load on both hips of the user.

Another embodiment comprises a first shoulder strap arranged for transferring part of the load supported by the load supporting device onto a user's shoulder in its state of use, wherein the first shoulder strap is mechanically connected with one of the hip pads or with one of the lateral members. This may help reduce the load transferred onto the user's hips.

A further embodiment comprises a second shoulder strap similar to the first shoulder strap explained above. This may help reduce the load transferred onto the user's hips.

An embodiment comprises a chest strap for stabilizing the load supporting device in its state of use, preferably arranged for releasably connecting the first and second shoulder strap. This may help to secure the load supporting device to the user.

Another embodiment comprises a shoulder pad, which is arranged to abut on the user's shoulders in the state of use, wherein the first arm and/or the second arm are mechanically connected with the shoulder pad. This may help to stabilise the load supporting device relative to the user. Further, relative motion of the respective arm relative to the user may be reduced. The shoulder pad may be combined with the first and/or the second shoulder strap.

In an embodiment, the length of the load bearing member can be adjusted by a cable pull mechanism operable also while a load is supported to the load bearing member. The cable pull mechanism is arranged such that the length of the load bearing member can be extended or shortened after pulling the cable or while the cable is pulled.

The base member and/or the dorsal member can be made with aluminium, steel, magnesium, a polymer, PP, PE, ABS and/or a fibre reinforced polymer.

The mechanical connection of the base member with the dorsal member can be established by two or more bolts and nuts, a clamping mechanism, a locking mechanism or a quick release mechanism to allow for easy and fast height adjustment to ensure optimal fit of the device to the user.

One of the above embodiments can be used for lifting and/or carrying a piece of luggage, a piece of furniture, construction material, construction components, a larger or heavier assembly, moving boxes, parcels, bags, and/or other heavy loads.

### Exemplary embodiments

Further advantages become apparent to the skilled person from the following exemplary embodiments.

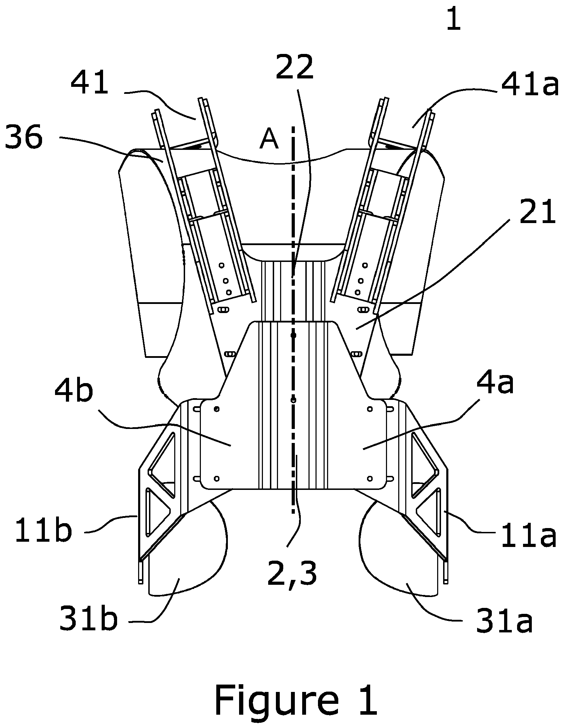

Figure 1 schematically shows a first exemplary load supporting device 1 for attaching to the pelvis of a user. The load supporting device comprises a base member 2 having a first groove 3 extending along a first axis A (dashed line), a first extension section 4a and a second extension section 4b. The first groove is arranged between the first and second extension sections. The device includes an angled first lateral member 11a, an end of which is mechanically connected with the first extension section. The device further includes an angled second lateral member 11b, an end of which is mechanically connected with the second extension section. Each of the first and second lateral members can be positioned essentially perpendicularly to the first axis when the mechanical connection with the base member is released. The first and second lateral members are arranged to transfer the load supported by the load supporting device onto a user's hips in its state of use. The device also comprises a dorsal member 21 having a second groove 22 which is mechanically connected with the first groove. The second groove extends along the first axis, wherein the dorsal member is arranged to abut on the back of the user in the state of use, wherein the first groove is arranged to guide the second groove slidingly along the first axis, when the mechanical connection between the first and second grooves is temporarily released.

Alternatively or additionally, each of the first and second lateral members can be pivoted relative to the base member when the mechanical connection with the base member is released, also for better adapting the load supporting device to the user's anatomy.

The load supporting device has a shoulder pad 36 which is arranged to abut on the user's shoulders in the state of use. The base member, the lateral members and/or the dorsal members are made with aluminium. The lateral members have triangular recesses for saving material and reducing the respective weight. The first groove 3 accepts a section of the second groove 22. The second groove extends further upwardly than the first groove in the state of use.

A first 41 and a second arm 41a extend essentially upwardly from the dorsal member. The arms have U-shaped cross sections. The arms can be bolted, riveted, welded or glued to the dorsal member. The free ends 43 of the first and second arm are spaced apart, such that there is a gap for the neck and head of a user. Load bearing members, such as a strap or rope, and payload attachment members are not shown. The free ends of the first and second arm are connected with the shoulder pad for stabilising the exemplary load supporting device relative to the user's torso.

The load supporting device can have a cable pull mechanism for adjusting the length of the load bearing member. The cable pull mechanism can be operable also while a load is supported to the load bearing member, wherein the cable pull mechanism is arranged such that the length of the load bearing member can be extended or shortened after pulling the cable or while the cable is pulled.

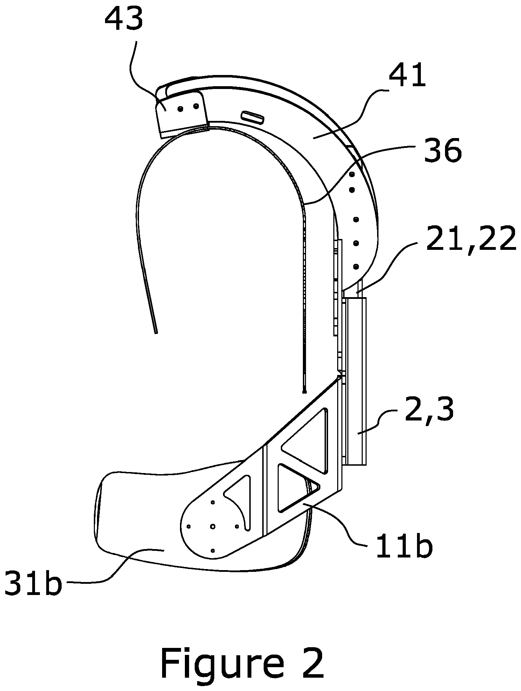

Figure 2 shows a side view on the first exemplary load supporting device and the above explanations apply.

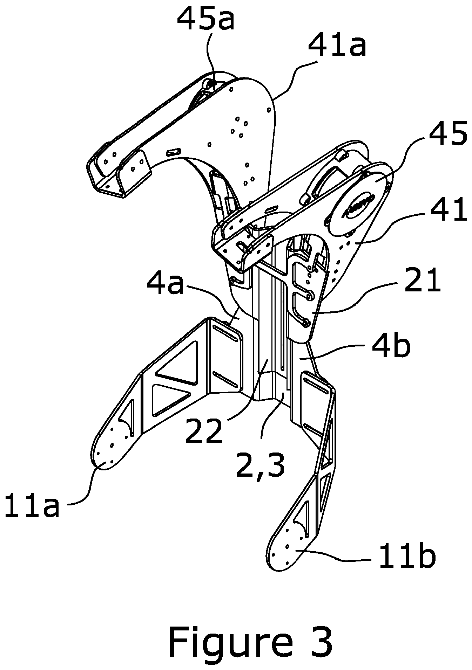

The second exemplary embodiment shown schematically in figure 3 differs from the first exemplary embodiment in that the first and second arm each support a spring loaded spool 45, 45a. Each of the free ends of the first 41 and second arm 41a can have a releasable brake, preferably a cam cleat, suitable to prevent unintended unwinding of the respective load bearing member.

Alternatively or additionally, each of the first and second lateral members can be pivoted relative to the base member when the mechanical connection with the base member is released, also for better adapting the load supporting device to the user's anatomy.

The load supporting device can have a cable pull mechanism for adjusting the length of the load bearing member. The cable pull mechanism can be operable also while a load is supported to the load bearing member, wherein the cable pull mechanism is arranged such that the length of the load bearing member can be extended or shortened after pulling the cable or while the cable is pulled.

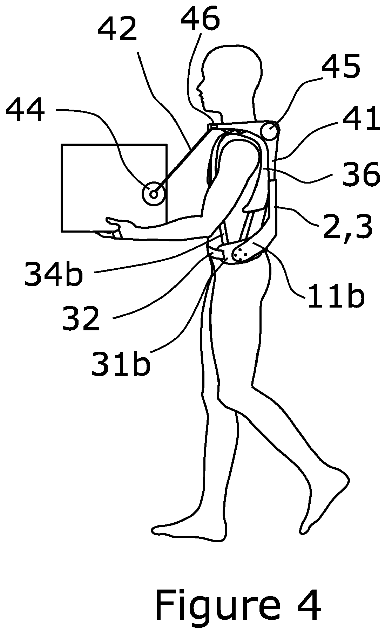

Figure 4 schematically shows a user wearing the second exemplary embodiment and the respective explanations apply. Further, a belt member 32 connected to the hip pads 31b helps to secure the load supporting device on the user's pelvis. The shoulder straps 34b (one is shown) are connected to the hip pads and help to transfer some of the load onto the user's shoulders and/or to safely secure the device to the user's torso. A load is secured by a payload attachment member 44. The load bearing member 42 extends from the spool 45, through the brake 46, passes the free end of the first arm and is connected to the payload attachment member.

### Reference signs

- 1: load supporting device
- 2: base member
- 3: first groove
- 4: extension section
- 11: angled lateral member
- 21: dorsal member
- 22: second groove
- 31: hip pad
- 32: belt member
- 34: shoulder strap
- 35: chest strap
- 36: shoulder pad
- 41: first arm
- 42: load bearing member
- 43: free end of first arm
- 44: payload attachment member
- 45: spool
- 46: brake

- A: first axis, essentially vertical in a state of use

## Claims

1. Load supporting device (1) for attaching to the pelvis of a user, the supporting device comprising
a base member (2) having a first groove (3) extending along a first axis A, a first (4a) and a second extension section (4b), wherein the first groove is arranged between the first and second extension sections,
an angled first lateral member (11a), an end of which is mechanically connected with the first extension section, wherein the first lateral member can be positioned essentially perpendicularly to the first axis and/or can be pivoted relative to the base member, when the mechanical connection with the base member is released, and
an angled second lateral member (11b), an end of which is mechanically connected with the second extension section, wherein the second lateral member can be positioned essentially perpendicularly to the first axis and/or can be pivoted relative to the base member, when the mechanical connection with the base member is released,
wherein the first and second lateral members are arranged to transfer the load supported by the load supporting device onto a user's hips in its state of use,
a dorsal member (21) having a second groove (22) which is mechanically connected with the first groove, wherein the second groove extends along the first axis, wherein the dorsal member is arranged to abut on the back of the user in the state of use,
wherein the first groove is arranged to guide the second groove slidingly along the first axis, when the mechanical connection between the first and second grooves is temporarily released.

2. Load supporting device according to claim 1, wherein a first hip pad (31a) is mechanically connected to the first lateral member, and a second hip pad (31b) is mechanically connected to the second lateral member, wherein the hip pads are arranged between the respective lateral member and the respective user's hip in the state of use.

3. Load supporting device according to claim 2, wherein the mechanical connections of the first hip pad with the first lateral member and of the second hip pad with the second lateral member are arranged to permit relative rotational movement or relative translational movement.

4. Load supporting device according to one of claims 2 and 3, wherein a releasable belt member (32) arranged to surround the pelvis or hips of the user in the state of use is mechanically connected to the first and second hip pad (31a, 31b), preferably includes the first and second hip pad.

5. Load supporting device according to one of the preceding claims, wherein a first arm (41) extends from the dorsal member (21) and away from the base member (2), wherein a free end (43) of the first arm is positioned higher than and in front of a shoulder of the user in the state of use.

6. Load supporting device according to claim 5, wherein the first arm has an angled cross section.

7. Load supporting device according to one of claims 5 and 6, wherein a load bearing member (42), such as a strap or rope, extends from the free end (43) of the first arm, wherein a payload attachment member (44), such as a hook or carabiner or other lifting tackle, is mechanically connected to a free end of the load bearing member, wherein a length of the load bearing member between the arm's free end (43) and the payload attachment member is adjustable.

8. Load supporting device according to claim 7, wherein the first arm supports a preferably spring loaded spool (45) which is arranged for winding up the load bearing member, wherein the load bearing member is mechanically connected with the spool, preferably wherein the first arm or the spool comprise a releasable brake (46), preferably a cam cleat, suitable to prevent unintended unwinding of the load bearing member.

9. Load supporting device according to claim 7 or 8, wherein the length of the load bearing member can be adjusted by a cable pull mechanism operable also while a load is supported to the load bearing member, wherein the cable pull mechanism is arranged such that the length of the load bearing member can be extended or shortened after pulling the cable or while the cable is pulled.

10. Load supporting device according to one of claims 5 to 9, further comprising a second arm (41a) similar to the first arm according to one of claims 5 to 9, wherein a free end (43a) of the second arm and the first arm's free end (43) leave a gap for the neck and/or head of the user in the state of use.

11. Load supporting device according to one of the preceding claims, further comprising a first shoulder strap (34) for transferring part of the load supported by the load supporting device onto a user's shoulder in its state of use, wherein the first shoulder strap is mechanically connected with one of the hip pads (31) or with one of the lateral members (11).

12. Load supporting device according to claim 11, further comprising a second shoulder strap (34a) similar to the first shoulder strap according to claim 11.

13. Load supporting device according to one of the preceding claims, further comprising a chest strap (35) for stabilizing the load supporting device in its state of use, preferably arranged for releasably connecting the first and second shoulder strap.

14. Load supporting device according to one of claims 5 to 13, comprising a shoulder pad (36) arranged to abut on the user's shoulders in the state of use, wherein the first arm and/or the second arm are mechanically connected with the shoulder pad.

15. Use of a load supporting device according to one of the preceding claims for lifting and/or carrying a piece of luggage, a piece of furniture, construction material, construction components, a larger or heavier assembly, moving boxes, parcels, bags, and/or other heavy loads.
